(19) Europäisches Patentamt
European Patent Office
Office européen des brevets

(11) **EP 3 634 144 B1**

(12) **EUROPEAN PATENT SPECIFICATION**

(45) Date of publication and mention
of the grant of the patent:
**21.07.2021 Bulletin 2021/29**

(51) Int Cl.:
*A23G 9/28* (2006.01)   *B65D 33/02* (2006.01)
*B65D 85/78* (2006.01)   *B65D 85/72* (2006.01)

(21) Application number: **18727002.0**

(22) Date of filing: **24.05.2018**

(86) International application number:
**PCT/EP2018/063712**

(87) International publication number:
**WO 2018/224328 (13.12.2018 Gazette 2018/50)**

(54) **PACKAGED FROZEN CONFECTION**

BEHÄLTER FÜR GEFRORENE SÜSSWAREN

RÉCIPIENT DESTINÉ À UNE CONFISERIE GLACÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2017 EP 17174679**

(43) Date of publication of application:
**15.04.2020 Bulletin 2020/16**

(73) Proprietor: **Unilever IP Holdings B.V.**
**3013 AL Rotterdam (NL)**

(72) Inventors:
• **HAREL, Ari, Ran**
**South Burlington**
**Vermont 05403 (US)**
• **MAYES, Daniel, Matthew**
**Bedford Bedfordshire MK44 1LQ (GB)**
• **SHERWOOD, Paul, Leonard**
**Bedford Bedfordshire MK44 1LQ (GB)**
• **WARNER, Alannah, Victoria**
**Bedford Bedfordshire MK44 1LQ (GB)**

(74) Representative: **Askew, Sarah Elizabeth**
**Unilever PLC**
**Unilever Patent Group**
**Bronland 14**
**6708 WH Wageningen (NL)**

(56) References cited:
EP-A1- 1 757 531        EP-A2- 1 964 785
WO-A1-02/085130        WO-A1-2015/152739
WO-A1-2016/030856      WO-A1-2016/080419
WO-A2-2015/155634      US-A- 5 018 646

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates to packaged frozen confections such as ice cream. In particular, the invention relates to packaged frozen confections comprising a flexible pouch.

**Background of the invention**

In recent years, systems for dispensing frozen confections such as ice cream have been developed in which pre-packaged ice cream is provided in containers that can be squeezed by hand to extrude the confection. In particular pouch-based systems have been developed.

US 2009/0208630 discloses a spout pouch ice cream and frozen yogurt manufacturing method and a device capable of injecting ice cream after an overrun process through a narrow drinking tube of the spout pouch.

WO 2016/030856 describes a flexible pouch with memory support strips.

The present inventors have now recognized that there is a need for improvements in pouch-based packages for dispensing frozen confections like soft ice. In particular the present inventors have found that there is a need for packed frozen confections that allow consumers to effectively extrude frozen confection from the pouch with minimum effort. The inventors have also recognized a need for pouches that allow for more complete emptying of frozen confection therefrom and/or that allow for directing the flow of frozen confection more directly towards a product outlet.

The present inventors have found that by packaging frozen confections in a pouch with a certain configuration, one or more of the aforementioned needs may be met.

**Summary of the invention**

In a first aspect, the present invention is directed to a packaged frozen confection comprising a flexible pouch, wherein the pouch comprises a wall delimiting a cavity containing the frozen confection and extending in a longitudinal direction from a base end to a top end of the pouch, wherein the top end comprises a product outlet through which the frozen confection can be extruded from the cavity, and wherein:

- the base end comprises a gusset extending in a transverse direction;
- the top end comprises a top edge extending in the transverse direction; and
- the product outlet being disposed at or proximal to a corner of the top edge;

wherein the wall is deformable at least at the base end of the pouch to urge the frozen confection in the cavity towards the outlet and extrude at least a portion of frozen confection therefrom.

By providing such a packaged frozen confection, the present inventors have found that consumers are inclined to grip and squeeze the pouch at the gusseted base end (which is usually the thickest part of the pouch) which means that the dispensing force is consistently directed towards the top end where the product outlet is located. Furthermore, unlike, for example the pouch disclosed in US 2009/0208630 A, the product outlet is disposed at or proximal to a corner of the top edge. The present inventors have found that where the product outlet is at the centre of the top edge (as in US 2009/0208630 A), consumers are inclined to grip and squeeze the pouch at the side edges which directs the dispensing force both towards the top and base ends and can lead to choking of the flow and residual frozen confection in the base end.

Preferably the pouch comprises side edges, each at opposite extremes of the gusset and extending in the longitudinal direction as this further allows for the gusseted base end being the thickest part of the pouch. To further dissuade holding and squeezing of the pouch by the side edges, it is preferred that at least one of the side edges comprises an indented portion, more preferably each of the side edges comprise an indented portion.

The present inventors have found that the force needed to dispense the frozen confection from the pouch is attainable with a single hand squeezing the base end when the size of the pouch is not too large. Preferably the cavity has a volume of no more than 500 ml, more preferably no more than 475 ml, most preferably no more than 450 ml. Additionally or alternatively, preferably the cavity is filled with no more than 325 g of frozen confection, more preferably no more than 275 g and most preferably no more than 250 g.

The cavity of the pouch should be sufficient to hold at least one serving of frozen confection. Preferably, however, the pouch contains multiple servings of frozen confection. Therefore it is preferred that the cavity has a volume of at least 250 ml, more preferably at least 275 ml and most preferably at least 300 ml. Additionally or alternatively, the cavity is filled with at least 100 g of frozen confection, more preferably at least 150 g, and most preferably at least 175 g.

The product outlet could take any form such as a simple orifice. Preferably, however the outlet is in the form of a spout as this allows for more controlled dispensing, for example into an ice cream cone or other receptacle. To reduce the amount of manual force required to be applied to extrude the confection, it is preferred that the spout has an inner diameter of at least 10 mm, more preferably at least 12 mm and most preferably from 15 to 35 mm.

The wall of the pouch is typically formed from a plastic film material, more preferably a multi-layer laminated polymer film material. Preferred plastic materials are polymers such as polyethylene, polyethylene terephthalate, polypropylene, polyamide and combinations thereof. In some embodiments the film may be a foil-plastic laminate, however the present inventors have found that the cold feeling transmitted by the pouch to the hand of a user can be reduced if the film does not contain a foil layer. Thus it is preferred that the plastic film material does not comprise a metallic layer.

Typically the pouch is made from a continuous roll of the film material and cut and sealed therefrom, for example, with heat sealing. Preferably the top edge is formed by a seal between opposing faces of the plastic film material. Additionally or alternatively the side edges are formed by seals between the opposing faces of the plastic film material.

In a preferred embodiment, and especially where the film material comprises foil, the packaged frozen confection comprises a removable sleeve at least partly surrounding the wall of the pouch and being sufficiently flexible to allow transmission of manual force through the sleeve to deform the wall at least at the base end of the pouch and thereby urge the frozen confection in the cavity towards the outlet and be extruded therefrom.

The present inventors have found that the cold feeling experienced when handling a pouch containing frozen confection depends not only on the temperature of the product contained in the pouch but also on the presence of condensed moisture and/or ice on the outer surface of the wall. Therefore the sleeve of the present invention is removable from the pouch such that the sleeve itself does not need to be stored in the storage freezer wherein its surface would be susceptible to condensation and ice formation. Thus when the sleeve is applied to the pouch after removing the pouch from a freezer, the surface handled by the consumer is the sleeve surface which does not feel uncomfortably cold to the touch. As used herein the term "removable" means that the sleeve can be repeatedly removed and reapplied to the pouch.

The feature that the sleeve is removable also aids in recycling and/or reuse, especially wherein the sleeve is of a different material to the wall of the pouch and thus could not be recycled in the same manner and/or the sleeve is more durable than the pouch and therefore suitable for reuse with additional pouches.

Although a large part of the uncomfortable cold feeling induced in the hand of the user is reduced by employing a removable sleeve, further advantages may be obtained by employing an insulating material in the sleeve. In particular heat from the hand of a user can quickly be transmitted through the wall of the pouch, causing the frozen confection within the pouch to melt and thus destroy the carefully created microstructure. Thus preferably the sleeve comprises, consists essentially of or consists of a thermally-insulating material. As used herein "thermally-insulating" means having a thermal conductivity of less than 1 W m$^{-1}$ K$^{-1}$, more preferably less than 0.5 W m$^{-1}$ K$^{-1}$ and most preferably from 0.0001 to 0.1 W m$^{-1}$ K$^{-1}$.

Additionally or alternatively the sleeve comprises, consists essentially of or consists of an elastomer, most preferably neoprene. Elastomeric material provides extra grip and so increases the ease of handling and squeezing the pouch. Preferably the elastomer is foamed to enhance thermal insulation, most preferably the sleeve comprises foamed neoprene.

The sleeve is such that it allows transmission of manual force through the sleeve to deform the wall at least at the base end of the pouch. Applying force to the base of the pouch is important as this not only allows for more complete emptying of the pouch but also allows for efficient transmission of force. For example the inventors have found that many users find gripping the base of the pouch and then rolling the sleeve and wall up from the base whilst squeezing is especially convenient. Thus it is preferred that the sleeve allows for transmission of manual force through the sleeve to allow the wall to be rolled up towards the outlet. Additionally or alternatively, the sleeve completely envelops the base end of the pouch.

The more flexible the sleeve, the more easy it is to transmit force through the sleeve to the wall of the pouch. Thus it is preferred the sleeve is flexible such that it is not self-standing.

Preferably the sleeve is such that it allows a user to grip substantially anywhere on the pouch. Therefore preferably the sleeve surrounds at least 80% of the external surface area of the wall, more preferably from 90 to 100%.

Preferably the sleeve has a retaining part releasably engaging the top end of the pouch to retain the pouch within the sleeve during extrusion of the frozen confection through the product outlet. The term "releasable" means that the retaining part can be repeatedly engaged and disengaged with the top end of the pouch.

One drawback of reusing a removable sleeve is that residue of frozen confection deposited on the sleeve from earlier uses can be messy or even pose a hygiene risk. These problems can be ameliorated by designing the sleeve such that it has minimal contact with the product outlet both during dispensing and during applying and removing the sleeve. This objective can be achieved by providing a sleeve that comprises an opening disposed towards the top end of the pouch and through which the base end of the pouch can be inserted prior to engaging the retaining part to the top end of the pouch. More preferably, the retaining part is configured such that it can be engaged to the top end without passing over the product outlet. For example, the retaining part may comprise one or more flaps that extend from the sleeve on a first side of the top end and pass around the outlet to a second side to which they can be reversible secured.

The packaged frozen confection of the present invention allows for efficient transfer of manual force and thus allows effective dispensing of a range of frozen confections. To aid dispensing, however it is preferred that the frozen confection within the pouch is formulated to be soft and yet stable at a range of temperatures encountered in domestic freezers. In particular it is preferred that the frozen confection comprises freezing point depressants in an amount of from 25 to 35% by weight of the frozen confection, wherein the number average molecular weight $<M>_n$ of the freezing point depressants is less than 250 g mol$^{-1}$.

For the purposes of the present invention, the average molecular weight for a mixture of freezing point depressants is defined by the number average molecular weight $<M>_n$ (Equation 1). Where $w_i$ is the mass of species i, $M_i$ is the molar mass of species i and $N_i$ is the number of moles of species i of molar mass $M_i$.

$$< M >_n = \frac{\sum w_i}{\sum (w_i / M_i)} = \frac{\sum N_i M_i}{\sum N_i}$$

(Equation 1)

Freezing point depressants as defined in this invention consist in:

- monosaccharides and disaccharides
- oligosaccharides containing from three to ten monosaccharide units joined in glycosidic linkage.
- corn syrups with a dextrose equivalent (DE) of greater than 20 preferably > 40 and more preferably > 60. Corn syrups are complex multi-component sugar mixtures and the dextrose equivalent is a common industrial means of classification. Since they are complex mixtures their number average molecular weight $<M>_n$ can be calculated from Equation 2 below. (Journal of Food Engineering, 33 (1997) 221-226)

$$DE = \frac{18016}{<M>_n}$$

(Equation 2)

- erythritol, arabitol, glycerol, xylitol, sorbitol, mannitol, lactitol and malitol.
- ethanol.

The amount of ice in the product is determined, to a large extent by the amount and molecular weight of the freezing point depressants. If the amount of ice is too high, then the confection becomes too difficult to extrude at low temperatures found in some storage freezers (for example -22 °C). Thus the freezing point depressants preferably have a number average molecular weight $<M>_n$ of no more than 250 g mol$^{-1}$, and are present in an amount of at least 25% by weight of the frozen confection. More preferably the amount of freezing point depressants is at least 26%, even more preferably at least 27% by weight of the frozen confection.

Preferably the number average molecular weight $<M>_n$ of the freezing point depressants is no more than 240, more preferably no more than 230 and most preferably no more than 220 g mol$^{-1}$.

On the other hand if the amount of freezing point depressants becomes too high and/or their molecular weight becomes too low then the rheology will very liquid-like at higher temperatures encountered in some storage freezers (for example -16 °C). Thus the freezing point depressants preferably have a number average molecular weight $<M>_n$ of no less than 200 g mol$^{-1}$, and are present in an amount of no more than 35% by weight of the frozen confection. More preferably the amount of freezing point depressants is no more than 34%, more preferably still no more than 33% and most preferably no more than 32% by weight of the frozen confection.

Preferably the number average molecular weight $<M>_n$ of the freezing point depressants is no less than 205, more preferably no less than 208 and most preferably no less than 210 g mol$^{-1}$.

Erythritol is particularly effective at imparting the desired rheological properties to the frozen confection. In addition, in comparison to some other sugar alcohols, erythritol does not impart an unpleasant off-taste, is not overly sweet and does not interfere with natural digestion and excretion of food. Thus it is preferred that the freezing point depressants comprise erythritol.

Preferably the amount of erythritol is at least 0.25%, more preferably at least 0.5%, even more preferably at least 0.7% and most preferably at least 1% by weight of the frozen confection.

Preferably the amount of erythritol is not too high, otherwise the confection may be too liquid-like and/or it may be difficult to formulate the confection with the desired sweetness. Thus it is preferred that the amount of erythritol is no more than 7%, more preferably no more than 6%, even more preferably no more than 5%, more preferably still no more than 4% and most preferably no more than 3% by weight of the frozen confection.

Other than erythritol, it is preferred that the freezing point depressants are substantially comprised of saccharides. Preferably the freezing point depressants comprise at least 90% by weight of the freezing point depressants of mono, di and oligosaccharides, more preferably at least 92%. The total amount of mono, di and oligosaccharides and erythritol in the freezing point depressants is preferably at least 98% by weight of the freezing point depressants, more preferably 99 to 100%.

An especially preferred disaccharide is lactose as this provides freezing point depression without imparting a high amount of sweetness. Preferably the freezing point depressants comprise lactose in an amount of at least 5% by weight of the freezing point depressants, more preferably from 10 to 25% by weight of the freezing point depressants. The lactose may be present in the confection as part of milk solids and/or added separately from milk solids.

Certain freezing point depressants are undesirable as they impart unwanted taste and/or physiological effects.

Preferably the frozen confection comprises less than 0.5% ethanol by weight of the frozen confection, more preferably less than 0.1% and more preferably still less than 0.01%, and most preferably 0%.

Preferably the frozen confection comprises less than 1.5% glycerol by weight of the frozen confection, more preferably less than 1% and more preferably still less than 0.5%, and most preferably from 0.2 to 0%. Additionally or alternatively the total amount of arabitol, glycerol, xylitol, sorbitol, mannitol, lactitol and malitol in the frozen confection is less than 1.5% by weight of the frozen confection, more preferably less than 1 % and more preferably still less than 0.5%, and most preferably from 0.2 to 0%.

Preferably the frozen confection comprises less than 5% fructose by weight of the frozen confection, more preferably less than 3% and most preferably from 0 to 2%.

Preferably the freezing point depressant impart the desired sweetness to the frozen confection without the need to use intense sweetener. By "intense sweetener" is meant one or more of aspartame, saccharin, acesulfame K, alitame, thaumatin, cyclamate, glycyrrhizin, stevioside, neohesperidine, sucralose, monellin, and neotame. Preferably the frozen confection is substantially free from intense sweetener. More preferably the frozen confection comprises intense sweetener in an amount less than the amount required to impart an equivalent sweetness as 1% sucrose, more preferably less than the amount required to impart an equivalent sweetness as 0.5% sucrose, and most preferably less than the amount required to impart an equivalent sweetness as 0.1% sucrose. Additionally or alternatively, the frozen confection comprises less than 0.003% intense sweetener, more preferably less than 0.001% and most preferably from 0.0001 to 0%.

The frozen confection is typically made by freezing a mix (more preferably a pasteurized mix) of ingredients such as water, fat, freezing point depressants, protein (normally milk proteins), and optionally other ingredients such as emulsifiers, stabilisers, colours and flavours. Frozen confections include ice cream, gelato, frozen yoghurt, sorbets, granitas, shaved ices and the like. Preferably the frozen confection is ice cream.

The frozen confection is preferably aerated. By "aerated" is meant that the confection has an overrun of at least 30%. More preferably the frozen aerated confection has an overrun of from 70 to 135%, most preferably from 80 to 110%.

Overrun (OR) is defined by the following Equation 3

$$OR = \frac{volume..of..frozen..confection - volume..of..premix..at..ambient..temp}{volume..of..premix..at..ambient..temp} \times 100$$

(Equation 3)

It is measured at atmospheric pressure. Ambient temperature is 20 °C.

The frozen confection preferably comprises fat in an amount of from 1 to 15% by weight of the frozen confection, more preferably from 4 to 12%, and most preferably from 5 to 10%.

The frozen confection preferably comprises protein in an amount of from 0.5 to 8% by weight of the frozen confection, more preferably from 1 to 6%, and most preferably from 1.5 to 5%.

In a further aspect the present invention provides a method for dispensing a frozen confection from a package, the method comprising the steps of:

(a) providing a packaged frozen confection as claimed in any embodiment of the first aspect; and
(b) applying manual force to the packed frozen confection to deform the wall at least at the base end of the pouch and thereby urge the frozen confection in the cavity towards the outlet and extrude at least a portion of frozen confection therefrom.

Typically the pouch is stored in a domestic freezer between dispensing occasions. Thus it is preferred that between dispensing portions of the frozen confection, the pouch is stored in a freezer at a temperature of less than -10 °C, more preferably at a temperature of from -14 to -25 °C, and most preferably from -16 to -22 °C.

Except in the Examples, all numbers in this description indicating amounts of material, time periods, length scales, conditions of reaction, physical properties of materials and/or use may optionally be understood as modified by the word "about".

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention such disclosure is also to be considered to apply to any other aspect of the invention *mutatis mutandis.*

## Brief description of the drawings

The present invention will now be described with reference to the figures, wherein:

Figure 1a shows a front view of an embodiment of a packaged frozen confection of the invention.
Figure 1b shows a side view of the packaged frozen confection of Figure 1a.
Figure 1c shows a bottom view of the packaged frozen confection of Figure 1a.
Figure 2 shows the packaged frozen confection of Figure 1 being used to dispense a portion of frozen confection into a cone.
Figure 3 shows a front view of another embodiment of a packaged frozen confection of the invention.
Figure 4 shows an embodiment of a sleeve suitable for use in the invention.
Figure 5 shows the packaged frozen confection of Figure 1 additionally comprising the sleeve of Figure 4 applied to the pouch.

## Detailed description

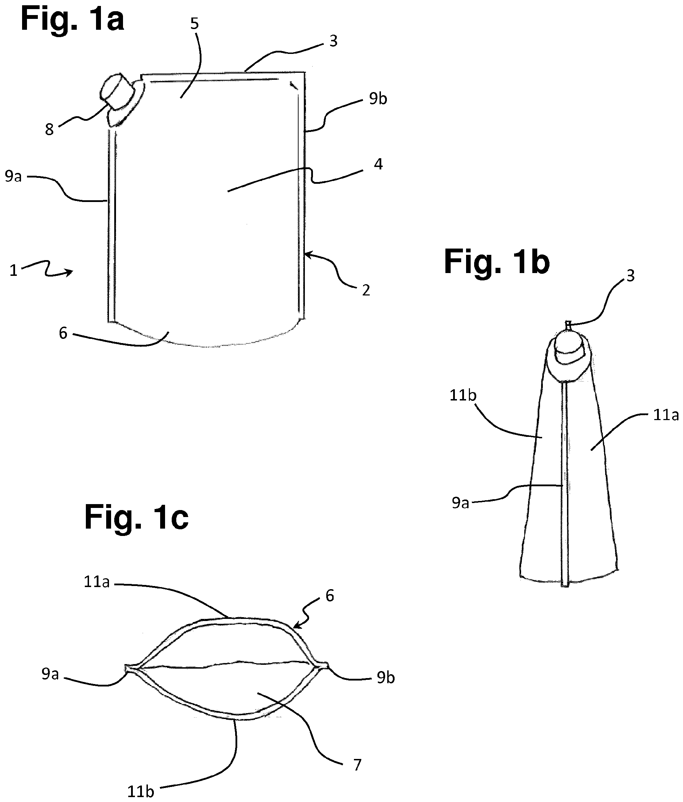

Figures 1a to 1c show a packaged frozen confection (1) according to an embodiment of the invention. The packed confection (1) comprises a flexible pouch (2) which envelopes the frozen confection.

The pouch comprises a wall (4) formed from a sheet of a multilayer polymer laminate film, wherein following formation of a gusset (7), opposing front and back faces (11a, 11b) have been heat-sealed together at side edges (9a, 9b) and a top edge (3) of the wall (4). The pouch extends from a base end (6) in a longitudinal direction to a top end (5). On the underside of the base end (6) is a gusset (7) which forms a base on which the pouch (2) is self-standing on a flat surface. As best seen in Figure 1b, owing to the presence of the gusset (7), the pouch (2) is thickest at the base end (6) and has a thickness that tapers in the longitudinal direction.

At one corner of the top end (5) a product outlet (8) in the form of a spout is sealingly engaged with the wall (4), for example through heat sealing or adhesive. Although not shown, the product outlet (8) is preferably closable by a removable cap.

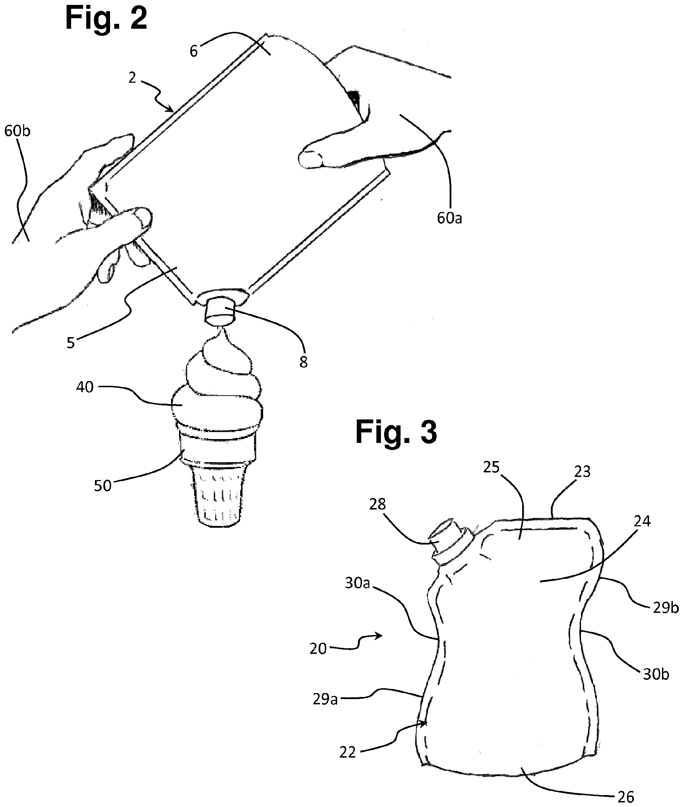

Figure 2 shows the pouch (2) when being used to dispense a portion of frozen confection (40) into a receptacle (50) such as a wafer cone. The specific shape of the pouch is designed to encourage a user to grip and squeeze the base end (6) with a first hand (60a) whilst supporting the top end (5) of the pouch (2) with a second hand (60b) with the nozzle (8) directed towards the receptacle (50). This ensures that the dispensing force consistently urges the frozen confection within the pouch towards the spout (8) and not to other parts of the pouch (2).

Figure 3 shows another embodiment of the packaged frozen confection (20) of the invention. The pouch (22) is similar to the pouch (2) shown in Figures 1 and 2 and has a spout (28) and a wall (24) extending in a longitudinal direction from a gusseted base end (26) to a top end (25) and sealed at top (23) and side (29a, 29b) edges. The pouch (22) shown in Figure 3 differs from that of Figures 1 and 2 in that each of the side edges (29a, 29b) comprises an indented portion (30a, 30b) approximately mid-way between the top (25) and bottom (26) ends. The presence of the indented portions (30a, 30b) make gripping of the pouch (22) by the side edges (29a, 29b) for dispensing awkward for a user and so further encourages a user to handle the pouch (20) by the base (26) and top (25) ends during dispensing.

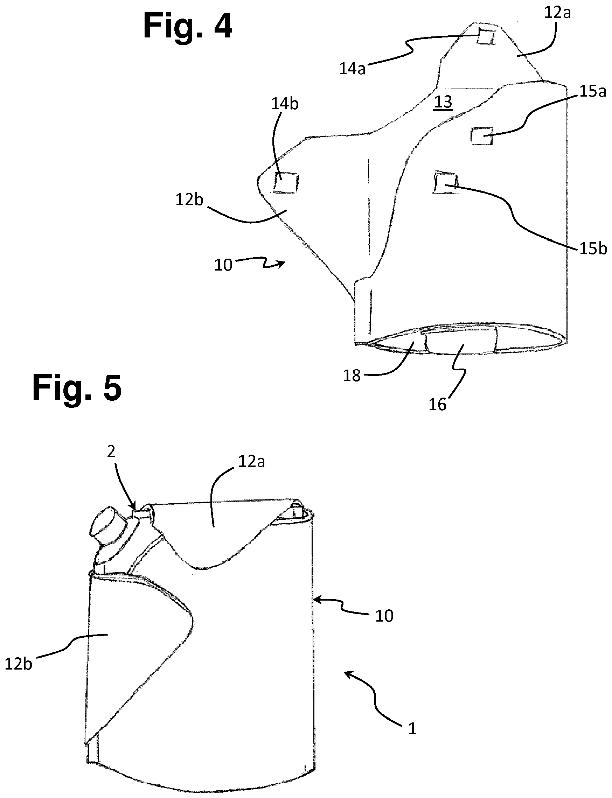

Figure 4 shows a sleeve (10) suitable for use with the packaged frozen confection (1) of Figure 1 in a state ready to receive the pouch (2). The sleeve is formed from a single sheet of insulating elastomeric material (such as, for example foamed neoprene) rolled into a cylindrical tube extending from a base opening (18) to a top opening (13) which, when applied to the pouch (2) is disposed at the top end (5) of the pouch (2). A retaining strap (16) spans the base opening (18). The sleeve (10) comprises two retaining flaps (12a and 12b), disposed at the top edge and a side edge of the sleeve respectively. Each flap (12a, 12b) has a reversible attachment area (14a, 14b) corresponding with an associated attachment area (15a, 15b) on an outer surface of the sleeve (10). The attachment areas are corresponding such that they form a reversible bond on contact. For example the attachment areas (14a and 14b) on the flaps could comprise hooks and the corresponding areas (15a and 15b) comprise loops such that on contact they form a hook-and-loop bond. Such hook-and-loop fasteners are well known in the art and include those sold under the Velcro® brand.

The sleeve (10) is applied to the pouch (2) by inserting the base end (6) of the pouch (2) into the top opening (13) of the sleeve (10) and then sliding the sleeve upwards until the strap (16) contacts the base of the pouch (2). The flaps (12a and 12b) are then folded around the top end (5) of the pouch (2) and secured in place by mating of the respective the attachment areas (14a with 15a and 14b with 15b). Thus as shown in Figure 5, with the sleeve (10) applied to the pouch (2), the flaps (12a and 12b) snugly retain the top end (5) such that when the packaged frozen confection is inverted for dispensing, the pouch (2) does not fall out of the sleeve (10).

Dispensing is best achieved by a user gripping the sleeve in the vicinity of the top end (5) and the base end (6) and squeezing and rolling the base end (6) upwards and inwards towards the top end (5).

After dispensing, the attachment areas (14a, 15a, 14b, 15b) can be unfastened simply by pulling the flaps (12a, 12b) outwards. The pouch (2) can then be slid upwards and out of the sleeve (10) without the product outlet (8) coming into contact with the sleeve (10). The pouch (2) can then be placed in a freezer for storage. On removal of the pouch (2) from the freezer for the next dispensing occasion, the sleeve (10) can then be reapplied to the pouch (2) as described above, thus preventing the user from having to touch the very cold outer wall (4) of the pouch (2) during dispensing.

The present invention will now be described, by way of example only, with reference to the following Examples.

EXAMPLE 1

Two ice creams were formulated with varying ice contents (as calculated at -18 °C) and erythritol amounts as shown in Table 1 (amounts in % w/w).

TABLE 1

|  | 1 | 2 |
|---|---|---|
| Coconut oil | 8.00 | 8.00 |
| Skimmed milk, powder | 4.15 | 4.15 |
| Whey protein, concentrate (30%) | 2.73 | 2.73 |
| Low Fructose Corn Syrup (63 DE) | 11.03 | 10.41 |
| Dextrose monohydrate | 16.73 | 15.80 |
| Sucrose | 1.91 | 1.81 |
| Erythritol | 1.58 | 2.3 |
| Gums | 0.30 | 0.30 |
| Kappa Carrageenan | 0.02 | 0.02 |
| Monodiglyceride | 0.33 | 0.33 |
| Flavour | 0.28 | 0.28 |
| Colour | 0.01 | 0.01 |
| Water | to 100 | to 100 |

The properties of the formulations are shown in Table 2.

TABLE 2

|  | 1 | 2 |
|---|---|---|
| Ice Content (%w/w) | 36 | 37 |
| Freezing Point Depressants (% w/w) | 31 | 30 |
| $<M>_n$ (g mol$^{-1}$) | 214 | 212 |
| Erythritol (%w/w) | 1.6 | 2.3 |

The ice creams were prepared by pasteurizing and homogenizing mixes prepared according to the above formulations. The mixes were aged at 4 °C overnight before freezing and aerating in a scraped surface heat exchanger (standard ice cream freezer). The air input to the freezer was controlled to give a target overrun of 100% (actual overrun varied between 92 and 110%). Freezing was controlled to give a target extrusion temperature of -7 °C (actual extrusion temperature varied between -6 and -9 °C).

The mixes were extruded directly into commercial food-grade pouches used for beverages and similar to the pouch shown in Figure 1. The pouch wall material was a laminate film comprising polyethylene terephthalate, aluminium, oriented polyamide and polyethylene. The product outlet was a spout with an internal diameter of 22 mm. The capacity of each pouch was 750 ml. An amount of 425 g of ice cream was filled into each pouch through the spout and then a closure cap screwed in place. The pouches were then hardened in a blast freezer and then transferred to a domestic freezer (-18 °C) for several days before use.

When the pouches were removed from the freezer, they were found to be extremely cold to the touch such that they could be held only for a few seconds before becoming uncomfortable to handle.

On the other hand, by applying sleeves to the pouches as shown in Figures 4 and 5, the pouches could be comfortably handled for several minutes. The sleeves were made from 1 mm thick foamed neoprene sandwiched between Lycra™ fabric and could easily be removed from and reattached to a pouch multiple times.

EXAMPLE 2

Further packaged ice creams were prepared in a similar manner as described in Example 1 except using a different pouch. The pouch shape was as shown in Figure 3. The pouch wall material was a laminate film comprising polyethylene terephthalate, oriented polyamide and polyethylene layers but without an aluminium layer. The product outlet was a spout with an internal diameter of 22 mm. The capacity of each pouch was 400 ml. An amount of 230 g of ice cream was filled into each pouch through the spout and then a closure cap screwed in place. The pouches were then hardened in a blast freezer and then transferred to a domestic freezer (-18 °C) for several days before use.

When the pouches were removed from the freezer, because of the difference in pouch film material and smaller size compared to the pouches of Example 1, the pouches were found to be convenient to handle even without application of a sleeve. Furthermore the shape and size of the pouches allowed for convenient and almost complete dispensing of the contents by a user.

**Claims**

1. A packaged frozen confection (1) comprising a flexible pouch (2), wherein the pouch (2) comprises a wall (4) delimiting a cavity containing the frozen confection and extending in a longitudinal direction from a base end (6) to a top end (5) of the pouch, wherein the top end (5) comprises a product outlet (8) through which the frozen confection can be extruded from the cavity, and wherein:

   - the base end (6) comprises a gusset (7) extending in a transverse direction;
   - the top end (5) comprises a top edge (3) extending in the transverse direction; and
   - the product outlet (8) being disposed at or proximal to a corner of the top edge (3);

   wherein the wall is deformable at least at the base end (6) of the pouch to urge the frozen confection in the cavity towards the outlet (8) and extrude at least a portion of frozen confection therefrom.

2. The packaged frozen confection as claimed in claim 1 wherein the pouch comprises side edges (9a, 9b), each at opposite extremes of the gusset (7) and extending in the longitudinal direction.

3. The packaged frozen confection as claimed in claim 2 wherein at least one of the side edges (9a, 9b) comprises an indented portion (30a, 30b).

4. The packaged frozen confection as claimed in any one of the preceding claims wherein the cavity has a volume of from 250 to 500 ml.

5. The packaged frozen confection as claimed in any one of the preceding claims wherein the wall (4) is formed from a plastic film material, preferably a multi-layer laminated plastic film material.

6. The packaged frozen confection as claimed in claim 5 wherein the top edge (3) is formed by a seal between opposing

EP 3 634 144 B1

faces (11a, 11b) of the plastic film material.

7. The packaged frozen confection as claimed in any one of the preceding claims, comprising a removable sleeve (10) at least partly surrounding the wall (4) of the pouch and being sufficiently flexible to allow transmission of manual force through the sleeve to deform the wall (4) at least at the base end (6) of the pouch and thereby urge the frozen confection in the cavity towards the outlet (8) and be extruded therefrom.

8. The packaged frozen confection as claimed in claim 7 wherein the sleeve (10) is a thermally-insulating sleeve.

9. The packaged frozen confection as claimed in any one of the preceding claims wherein the frozen confection comprises freezing point depressants in an amount of from 25 to 35% by weight of the frozen confection, wherein the number average molecular weight $<M>_n$ of the freezing point depressants is less than 250 g mol$^{-1}$.

10. The packaged frozen confection as claimed in claim 9 wherein the number average molecular weight $<M>_n$ of the freezing point depressants is no less than 205 g mol$^{-1}$.

11. The packaged frozen confection as claimed in claim 10 wherein the freezing point depressants comprise erythritol.

12. A method for dispensing a frozen confection from a package, the method comprising the steps of:

(a) providing a packaged frozen confection as claimed in any one of the preceding claims; and
(b) applying manual force to the packed frozen confection to deform the wall (4) at least at the base end (6) of the pouch and thereby urge the frozen confection in the cavity towards the outlet (8) and extrude at least a portion of frozen confection therefrom.


**Patentansprüche**

1. Verpacktes gefrorenes Konfekt (1), umfassend einen flexiblen Beutel (2), wobei der Beutel (2) eine Wand (4) umfasst, die einen das gefrorene Konfekt enthaltenden Hohlraum begrenzt und sich in einer Längsrichtung von einem unteren Ende (6) zu einem oberen Ende (5) des Beutels erstreckt, wobei das obere Ende (5) einen Produktauslass (8) umfasst, durch den das gefrorene Konfekt aus dem Hohlraum extrudiert werden kann, und wobei:

- das untere Ende (6) einen Zwickel (7) umfasst, der sich in einer Querrichtung erstreckt;
- das obere Ende (5) einen oberen Rand (3) umfasst, der sich in der Querrichtung erstreckt; und
- der Produktauslass (8) an oder nahe einer Ecke des oberen Rands (3) angeordnet ist;

wobei die Wand zumindest am unteren Ende (6) des Beutels verformbar ist, um das gefrorene Konfekt in dem Hohlraum in Richtung des Auslasses (8) zu drängen und zumindest einen Teil des gefrorenen Konfekts daraus zu extrudieren.

2. Verpacktes gefrorenes Konfekt wie in Anspruch 1 beansprucht, wobei der Beutel Seitenränder (9a, 9b) umfasst, die sich jeweils an gegenüberliegenden Extremen des Zwickels (7) befinden und sich in der Längsrichtung erstrecken.

3. Verpacktes gefrorenes Konfekt wie in Anspruch 2 beansprucht, wobei mindestens einer der Seitenränder (9a, 9b) einen eingebuchteten Abschnitt (30a, 30b) umfasst.

4. Verpacktes gefrorenes Konfekt wie in irgendeinem der vorhergehenden Ansprüche beansprucht, wobei der Hohlraum ein Volumen von 250 bis 500 ml aufweist.

5. Verpacktes gefrorenes Konfekt wie in irgendeinem der vorhergehenden Ansprüche beansprucht, wobei die Wand (4) aus einem Kunststofffolienmaterial, bevorzugt einem mehrschichtigen laminierten Kunststofffolienmaterial, gebildet ist.

6. Verpacktes gefrorenes Konfekt wie in Anspruch 5 beansprucht, wobei der obere Rand (3) durch eine Versiegelung zwischen gegenüberliegenden Flächen (11a, 11b) des Kunststofffolienmaterials gebildet wird.

7. Verpacktes gefrorenes Konfekt wie in irgendeinem der vorhergehenden Ansprüche beansprucht, umfassend eine abnehmbare Hülle (10), die die Wand (4) des Beutels zumindest teilweise umgibt und ausreichend flexibel ist, um die Übertragung von manueller Kraft durch die Hülle zu ermöglichen, um die Wand (4) zumindest am unteren Ende (6) des Beutels zu verformen und dadurch das gefrorene Konfekt in dem Hohlraum in Richtung des Auslasses (8) zu drängen und daraus zu extrudieren.

8. Verpacktes gefrorenes Konfekt wie in Anspruch 7 beansprucht, wobei die Hülle (10) eine wärmeisolierende Hülle ist.

9. Verpacktes gefrorenes Konfekt wie in irgendeinem der vorhergehenden Ansprüche beansprucht, wobei das gefrorene Konfekt Gefrierpunktserniedrigungsmittel in einer Menge von 25 bis 35 Gewichts-% des gefrorenen Konfekts umfasst, wobei das Zahlenmittel des Molekulargewichts $<M>_n$ der Gefrierpunktserniedrigungsmittel weniger als 250 g mol$^{-1}$ beträgt.

10. Verpacktes gefrorenes Konfekt wie in Anspruch 9 beansprucht, wobei das Zahlenmittel des Molekulargewichts $<M>_n$ der Gefrierpunktserniedrigungsmittel nicht weniger als 205 g mol$^{-1}$ beträgt.

11. Verpacktes gefrorenes Konfekt wie in Anspruch 10 beansprucht, wobei die Gefrierpunktserniedrigungsmittel Erythrit umfassen.

12. Verfahren zum Abgeben eines gefrorenen Konfekts aus einer Verpackung, wobei das Verfahren die folgende Schritte umfasst:

(a) Bereitstellen eines verpackten gefrorenen Konfekts wie in irgendeinem der vorhergehenden Ansprüche beansprucht; und
(b) Anwenden von manueller Kraft auf das verpackte gefrorene Konfekt, um die Wand (4) zumindest am unteren Ende (6) des Beutels zu verformen und dadurch das gefrorene Konfekt in dem Hohlraum in Richtung des Auslasses (8) zu drängen und mindestens einen Teil des gefrorenen Konfekts daraus zu extrudieren.

## Revendications

1. Confiserie congelée emballée (1) comprenant une poche flexible (2), dans laquelle la poche (2) comprend une paroi (4) délimitant une cavité contenant la confiserie congelée et s'étendant dans une direction longitudinale à partir d'une extrémité de base (6) jusqu'à une extrémité supérieure (5) de la poche, dans laquelle l'extrémité supérieure (5) comprend une sortie de produit (8) à travers laquelle la confiserie congelée peut être extrudée à partir de la cavité, et dans laquelle :

- l'extrémité de base (6) comprend un soufflet (7) s'étendant dans une direction transversale ;
- l'extrémité supérieure (5) comprend un bord supérieur (3) s'étendant dans la direction transversale ; et
- la sortie de produit (8) étant disposée à ou à proximité d'un coin du bord supérieur (3) ;

dans laquelle la paroi est déformable au moins à l'extrémité de base (6) de la poche pour pousser la confiserie congelée dans la cavité vers la sortie (8) et extruder au moins une portion de confiserie congelée à partir de celle-ci.

2. Confiserie congelée emballée selon la revendication 1, dans laquelle la poche comprend des bords latéraux (9a, 9b), chacun aux extrémités opposées du soufflet (7) et s'étendant dans la direction longitudinale.

3. Confiserie congelée emballée selon la revendication 2, dans laquelle au moins un des bords latéraux (9a, 9b) comprend une portion dentelée (30a, 30b).

4. Confiserie congelée emballée selon l'une quelconque des revendications précédentes, dans laquelle la cavité présente un volume de 250 à 500 ml.

5. Confiserie congelée emballée selon l'une quelconque des revendications précédentes, dans laquelle la paroi (4) est formée d'un matériau de film plastique, de préférence d'un matériau de film plastique stratifié multicouche.

6. Confiserie congelée emballée selon la revendication 5, dans laquelle le bord supérieur (3) est formé par un scellement entre des faces opposées (11a, 11b) du matériau de film plastique.

**7.** Confiserie congelée emballée selon l'une quelconque des revendications précédentes, comprenant une enveloppe amovible (10) entourant au moins partiellement la paroi (4) de la poche et étant suffisamment flexible pour permettre une transmission de force manuelle à travers l'enveloppe pour déformer la paroi (4) au moins à l'extrémité de base (6) de la poche et pousser par-là la confiserie congelée dans la cavité vers la sortie (8) et être extrudée à partir de celle-ci.

**8.** Confiserie congelée emballée selon la revendication 7, dans laquelle l'enveloppe (10) est une enveloppe thermiquement isolante.

**9.** Confiserie congelée emballée selon l'une quelconque des revendications précédentes, dans laquelle la confiserie congelée comprend des agents abaissant le point de congélation dans une quantité de 25 à 35 % en masse de la confiserie congelée, dans laquelle la masse moléculaire moyenne en nombre $<M>_n$ des agents abaissant le point de congélation est inférieure à 250 g mol$^{-1}$.

**10.** Confiserie congelée emballée selon la revendication 9, dans laquelle la masse moléculaire moyenne en nombre $<M>_n$ des agents abaissant le point de congélation n'est pas inférieure à 205 g mol$^{-1}$.

**11.** Confiserie congelée emballée selon la revendication 10, dans laquelle les agents abaissant le point de congélation comprennent de l'érythritol.

**12.** Procédé pour distribuer une confiserie congelée à partir d'un emballage, le procédé comprenant les étapes consistant à :

(a) fournir une confiserie congelée emballée selon l'une quelconque des revendications précédentes ; et
(b) appliquer une force manuelle à la confiserie congelée emballée pour déformer la paroi (4) au moins à l'extrémité de base (6) de la poche et pousser par-là la confiserie congelée dans la cavité vers la sortie (8) et extruder au moins une portion de confiserie congelée à partir de celle-ci.

# Fig. 1a

# Fig. 1b

# Fig. 1c

# Fig. 2

# Fig. 3

EP 3 634 144 B1

# Fig. 4

14a
12a
14b
13
15a
12b
15b
10
18
16

# Fig. 5

2
12a
10
12b
1

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090208630 A

- WO 2016030856 A

**Non-patent literature cited in the description**

- *Journal of Food Engineering,* 1997, vol. 33, 221-226